# EUROPEAN PATENT APPLICATION

(11) **EP 3 636 597 A1**
(43) Date of publication of application: **15.04.2020**
(21) Application number: 18199542.4
(22) Date of filing: 10.10.2018
(51) Int. Cl.: C01G 53/00, H01M 4/525

(54) **LITHIUM TRANSITION METAL COMPOSITE OXIDE AND METHOD OF PRODUCTION**

(71) Applicant: Northvolt AB, 11120 Stockholm (SE)
(72) Inventor: Yasuo, Anno, 11120 Stockholm (SE); Kazuhiko, Kikuya, 11120 Stockholm (SE); Takehiko, Suwa, 11120 Stockholm (SE); Tetsuya, Makino, 11120 Stockholm (SE); Koki, Inoue, 11120 Stockholm (SE); Takuma, Sakamoto, 11120 Stockholm (SE); Young, Chul, Chang, 11120 Stockholm (SE); Seung, Joon, Lee, 11120 Stockholm (SE); Su, Jin, Yoon, 11120 Stockholm (SE); Ju, Yong, Kim, 11120 Stockholm (SE); Hwamyung, Jang, 11120 Stockholm (SE)
(74) Representative: Stolmár & Partner Patentanwälte PartG mbB

(57) **Abstract**

The present invention relates to a lithium transition metal composite oxide capable of being used as a positive electrode (cathode) active material for non-aqueous electrolyte lithium secondary batteries having a general formula 1

Li_{1+a(1-x-y-z)}M1ₓM2_{y}M3_{(1-a)(1-x-y-z)}M3'_{a(1-x-y-z)}M4_{z}O_{2+a(1-x-y-z)}, [formula 1]

in which 0.7 ≤ x < 1, y = (1 - x)/2, 0 ≤ z ≤ 0.05 and 0 < a(1-x-y-z) ≤ 0.05, and where M1 is Ni having an oxidation state of three, M2 is one or more ions having an oxidation state of three, M3' and M3 are identically one or more ions with at least one ion being Mn, wherein ions M3' have an oxidation state of four and ions M3 have an oxidation state of three, and M4 is one or more ions of Mg, Al and B. Further, the present invention relates and a method for preparing the lithium transition metal composite oxide and to a non-aqueous electrolyte lithium secondary battery containing the lithium transition metal composite oxide

## Description

The present invention relates to a lithium transition metal composite oxide capable of being used as a positive electrode (cathode) active material in non-aqueous electrolyte lithium secondary batteries. Further, the present invention relates to a method for preparing the lithium transition metal composite oxide, to its use as positive electrode active material and to a non-aqueous electrolyte lithium secondary battery containing the lithium transition metal composite oxide.

In general, as a positive electrode active material in a lithium secondary battery an oxide of a transition metal compound and lithium is used. Examples of such oxides are LiNiO₂, LiCoO₂, LiMn₂O₄, LiFePO₄, LiNiₓCo₁₋ₓO₂(0≤x≤1), LiNi_{1-x-y}CoₓAlyO₂(0<x≤0.2, 0<y≤0.1) and LiNi_{1-x-y}CoₓMn_{y}O₂(0≤x≤0.5, 1≤y≤0.5). Such positive active materials however have limited electric capacity.

Accordingly, novel positive electrode active materials having various structures are suggested. In particular, according to the demand for high-capacity batteries, composite-based oxides are used as an alternative. For example, among such composite-based oxides there is Li₂MO₃-LiMeO₂ (wherein M and Me are transition metals) having a layered structure. The composite-based oxide having a layered structure enables intercalation/deintercalation of a great amount of Li ions, compared to other positive active materials, and thus, it has high capacity properties. However, since much lithium is released from Li₂MO₃, a structural change may occur during cycles and an average voltage decreases. This is due to the translocation of transition metal into empty Li ion sites.

Accordingly, there is still a high demand for a lithium transition metal composite oxide that can exhibit a high capacity as a positive electrode active material and has improved lifetime and high-rate properties.

It is therefore an object of the present invention to provide suitable lithium transition metal composite oxides that exhibit high capacity and have improved lifetime properties and high-rate properties when used as positive electrode active material in non-aqueous electrolyte lithium secondary batteries.

Additional objects of the present application become evident from the following description.

Surprisingly, the present inventors have found that the above objects are solved either individually or in any combination by a lithium transition metal composite oxide having a general formula 1

Li_{1+a(1-x-y-z)}M1ₓM2_{y}M3_{(1-a)(1-x-y-z)}M3'_{a(1-x-y-z)}M4_{z}O_{2+a(1-x-y-z)}, [formula 1]

in which 0.7 ≤ x < 1, y = (1 - x)/2, 0 ≤ z ≤ 0.05 and 0 < a(1-x-y-z) ≤ 0.05, and where M1 is Ni having an oxidation state of three, M2 is one or more metals having an oxidation state of three, M3 and M3' are identically one or more metals with at least one metal being Mn, wherein metals M3 have an oxidation state of three and metals M3' have an oxidation state of four, and M4 is one or more selected from Mg, Al and B.

The above objects are further solved by a method for preparing a lithium transition metal composite oxide having the general formula 1, and by a lithium transition metal composite oxide obtained or obtainable by the method as described herein.

Moreover, the present application provides for a use of the lithium transition metal composite oxide of the present invention as positive electrode active material and for a non-aqueous electrolyte lithium secondary battery comprising said positive electrode active material.

As used herein, the indication that an aqueous solution contains nickel (Ni), or contains manganese (Mn), or the like, is understood to mean that nickel, or manganese, or the like, is/are present in the aqueous solution in the form of an ion/cation, which terms are used interchangeably herein.

The lithium transition metal composite oxide of the present invention may be either a composite with a layered structure or a solid solution. In some cases, the lithium transition metal composite oxide may exist in a combination of a composite with a layered structure or a solid solution.

The lithium transition metal composite oxide according to the present invention contains a stabilized LiMeO₂ phase, whereby an electrochemically inert rocksalt phase Li₂Me'O₃ is introduced as a component to the overall electrode structure as defined. That is, the lithium transition metal composite oxide represented by formula 1 contains excess Li in a transition metal layer of LiMeO₂ (wherein Me corresponds to trivalent ions M1, M2 and M3, such as Ni³⁺, Mn³⁺ and Co³⁺), and excess Li is contained in the form of a Li₂Me'O₃ phase (wherein Me' corresponds to tetravalent ions M3', such as Mn⁴⁺), which has high capacity and stability at high voltage and, in LiMeO₂ with the layered structure, and accordingly, the lithium transition metal composite oxide exhibits a high capacity and structural stability as electrode active material.

In more detail, the rocksalt phase Li₂Me'O₃ has a layered-type structure in which discrete layers of lithium ions alternate with layers containing Me' and lithium ions (in a 2:1 ratio) between the close-packed oxygen sheets. As the Me' ions in Li₂Me'O₃ are tetravalent, they cannot be easily electrochemically oxidized by lithium extraction, whereas the trivalent transition metal cations Me can be electrochemically oxidized. Because there is no energetically favorable interstitial space for additional lithium in Li₂Me'O₃ having the rocksalt phase, Li₂Me'O₃ cannot operate as an insertion electrode and cannot be electrochemically reduced. The structure of the lithium transition metal composite oxide represented by formula 1 can be regarded essentially as a compound with a common oxygen array for both the LiMeO₂ and Li₂Me'O₃ components, but in which the cation distribution can vary such that domains of the two components exist side by side. Such a solid solution or domain structure does not rule out the possibility of cation mixing and structural disorder, particularly at domain or grain boundaries. In a generalized layered structure of the lithium transition metal composite oxide represented by formula 1, one layer contains Me, Me' and Li ions between sheets of close-packed oxygen ions, whereas the alternate layers are occupied essentially by Li ions alone. By analogy, in a nLiMeO₂·(1-n)Li₂Me'O₃ structure that contains monoclinic LiMeO₂, for example LiMnO₂, as the LiMeO₂ component, the tetravalent Me' ions can partially occupy the Me positions in the monoclinic layered LiMeO₂ structure, thereby providing increased stability to the overall structure.

According to the present invention, the Ni content of the lithium transition metal composite oxide should be high, i.e., index x has to satisfies the condition 0.7 ≤ x < 1 in the composite oxide of formula 1, such that the LiMeO₂ component is essentially LiNiO₂ modified in accordance with the invention. Preferably, index x in formula 1 satisfies the condition 0.75 ≤ x ≤ 0.9. Even more preferably, index x satisfies the condition 0.8 ≤ x ≤ 0.9. For example, x may be 0.80, 0.81, 0.82, 0.83, 0.84, 0.85, 0.86, 0.87, 0.88, 0.89 or 0.90. Most preferably, index x is 0.8 ≤ x ≤ 0.85. Such a high Ni content ensures that the discharge capacity is high and that the material structure maintains uniform under charging and discharging when the composite oxide is used as a positive electrode active material.

Further, according to the present invention within the lithium transition metal composite oxide represented by formula 1 the content of metal M2 on the one side and the content of metals M3 and M3' (optionally including M4) on the other side is substantially identical (that is, the molar ratio M2 : (M3+M3'+optionally M4) is approximately 1). This bears the advantage that a high discharge capacity can be achieved when the composite oxide is used as a positive electrode active material.

Further, the lithium transition metal composite oxide according to the present invention represented by formula 1 above satisfies the condition 0 < a(1-x-y-z) ≤ 0.05, which means that the molar ratio of Li and the sum of all metal cations (that is: Li : (M1+M2+M3+M3'+optionally M4)) is in the range of more than 1 to less than or equal to 1.05. Regarding the excess of Li ions in the lithium transition metal composite oxide, if the doping content of the metal cations is too high, i.e. the molar ratio Li : metal cations is 1 or less, the amount of Li ions in the composite oxide is relatively small, leading to a decrease in a charging amount. On the other side, if the molar ratio Li : metal cations is greater than 1.05, a high irreversible capacity loss and a high residual alkali amount on the particle surface is observed.

In a preferred embodiment of the invention, in formula 1 the condition 0 < a(1-x-y-z) ≤ 0.03 is satisfied.

In a further preferred embodiment of the invention, M2 in formula 1 is one or more transition metals having an oxidation state of three, which are more preferably selected form V, Fe and Co. Most preferably M2 is Co.

Further preferably, M3' and M3 in formula 1 are identically one or more transition metals, which are more preferably selected from Mn, Ti, Zr, Ru, Re and Pt, with at least one transition metal being Mn. This means in accordance with the above definition that M3 and M3' represent the same transition metal(s), which are however present within the composite oxide of formula 1 in different oxidation states. For example, in case M3/M3' represent only manganese, M3 is Mn³⁺ and M3' is Mn⁴⁺. It is preferred that M3 and M3' are Mn.

Even more preferably, in the composite oxide of formula 1 M2 represents Co and M3 and M3' represent Mn, each having the valence as defined above.

The lithium transition metal composite oxide according to the present invention may be doped by an element M4, wherein M4 is one or more selected from Mg, Al and B. Preferably, M4 is one or more selected from Mg and Al. Index z in general formula 1 of the lithium transition metal composite oxide satisfies the condition 0 ≤ z ≤ 0.05. Further preferably, index z satisfies the condition 0 ≤ z ≤ 0.045. According to another embodiment of the present invention, index z satisfies the condition 0 < z ≤ 0.05, more preferably 0 < z ≤ 0.045, even more preferably 0.005 ≤ z ≤ 0.045, In case doping element M4 is present, ions M3 and M3' and the Li ions are partially substituted by minor concentrations of one or more di- or trivalent cations M4, where M4 represents one or more of Mg, Al and B (i.e., cations Mg²⁺, Al³⁺, B³⁺). Such doping of the composite oxide imparts improved structural stability or electronic conductivity to a battery electrode during electrochemical cycling.

Preferably, the lithium transition metal composite oxide according to the present invention is in the form of particles. The lithium transition metal composite oxide may form a primary particle, or primary particles of the lithium transition metal composite oxide may agglomerate or bind to each other, or may be combined with other active materials to form a secondary particle. The average particle size of the primary particles is preferably in the range of about 100 nm to about 800 nm, more preferably in the range of about 200 nm to about 500 nm. When the average particle size of the primary particles is more than 800 nm, the resistance to diffusion of lithium ions tends to be increased, so that the lithium transition metal composite oxide particles tend to be deteriorated in initial discharge capacity. The average particle size of the secondary particles is preferably in the range of about 1 µm to 50 µm, more preferably of about 1 µm to about 25 µm. When the average particle size of the secondary particles is within this range, high electrochemical performance of the lithium secondary battery can be provided. The average particle size of the primary and secondary particles, respectively, is determined using a light scattering method using commercially available devices. This method is known *per se* to a person skilled in the art, wherein reference is also made in particular to the disclosure in JP 2002-151082 and WO 02/083555. In this case, the average particle sizes were determined by a laser diffraction measurement apparatus (Mastersizer 2000 APA 5005, Malvern Instruments GmbH, Herrenberg, DE) and the manufacturer's software (version 5.40) with a Malvern dry powder feeder Scirocco ADA 2000.

Further preferably, the lithium transition metal composite oxide of the present invention has an excellent tap density of between 1.0 g/cm³ to 2.0 g/cm³, preferably between 1.6 g/cm³ to 2.0 g/cm³. The high tap density positively influences the electrode density and hence the energy density of the battery when the lithium transition metal composite oxide is used as an active electrode material. The tap density is measured according to ISO 787 (formerly DIN 53194).

Especially preferred examples of the lithium transition metal composite oxide according to the invention have the composition Ni:Co:Mn:AI:Mg = (80:10:10:0:0), (83:8.5:8.5:0:0), (85:7.5:4:3.5:0), (90:5:0.5:4:0.5).

It was found that for these composite oxides the 0.1 C discharge capacity is 185 mAh/g or higher, and the initial charge-discharge efficiency is 85% or higher, and that they exhibit excellent lifetime when used as a positive electrode active material in a lithium secondary battery.

The present invention also relates to a method for preparing a lithium transition metal composite oxide having a general formula Li_{1+a(1-x-y-z)}M1ₓM2_{y}M3_{(1-a)(1-x-y-z)}M3'_{a(1-x-y-z)} M4_{z}O_{2+a(1-x-y-z)}, in which 0.7 ≤ x < 1, y = (1 - x)/2, 0 ≤ z ≤ 0.05 and 0 < a(1-x-y-z) ≤ 0.05, and where M1 is Ni having an oxidation state of three, M2 is one or more metals having an oxidation state of three, M3 and M3' are identically one or more metals with at least one metal being Mn, wherein metals M3 have an oxidation state of three and metals M3' have an oxidation state of four, and M4 is one or more selected from Mg, Al and B, the method comprising the steps of:
a) coprecipitating in an aqueous solution, which contains at least a Ni starting compound, a Mn starting compound and a M2³⁺ starting compound, a coprecipitation precursor;
b) treating the coprecipitation precursor to remove more than 85 % of total water from said coprecipitation precursor;
c) adding a Li starting compound to the coprecipitation precursor to obtain a mixture;
d) calcining the mixture at a temperature of equal to or more than 700 °C to obtain the lithium transition metal composite oxide.

The coprecipitation precursor of the composite oxide is preferably in the form particles and obtained by preparing an aqueous solution containing at least a Ni starting compound, a Mn starting compound and a starting compound of metal cation M2³⁺, and initiating precipitation of the composite oxide precursor in the solution. The precipitation may be initiated by any method known to a person skilled in the art, for example by adding a complexing agent to the solution, changing the pH or temperature of the solution, or by reducing the volume of the solvent. Preferably, the precipitation in the aqueous solution is initiated by changing the pH of the solution by addition of an alkali aqueous solution.

Preferably, M2 is one or more transition metals, which are more preferably selected form V, Fe and Co. In case M2 represents more than one metal, for each metal M2 a respective starting compound is added to the solution. It is preferred that M2 is Co. Further preferably, M3' and M3 are identically one or more transition metals, which are more preferably selected from Mn, Ti, Zr, Ru, Re and Pt, with at least one transition metal being Mn. Accordingly, in case M3/M3' represent one or more further metals besides Mn, for each further metal a respective starting compound is added to the solution. It is preferred that M3 and M3' are Mn. Even more preferably, in the composite oxide obtained by the method according to the invention, M2 represents Co, and M3 and M3' represent Mn, each having the valence as defined above.

As the starting compounds of M1 (i.e., Ni), the one or more metals M2 and the one or more metals M3/M3', with at least one metal being Mn, respective metal salts are preferably used. The metal salts are not particularly limited, but preferably are at least one of sulfates, nitrates, carbonates, acetates or chlorides, with sulfate salts being most preferred. For example, as the starting compounds of at least Ni, Mn and a metal cation M2³⁺ (i.e., the Ni³⁺ source, the Mn³⁺/Mn⁴⁺ source and the source of a metal cation M2³⁺) respective metal salts are used, which are independently selected from sulfates, nitrates, carbonates, acetates or chlorides, with sulfate salts being preferred.

As the alkali aqueous solution a sodium hydroxide aqueous solution, an ammonia aqueous solution, or a mixture thereof, is preferably used.

Further preferably, an aqueous solution, which is prepared by dissolving therein at least the Ni starting compound, the Mn starting compound and a M2³⁺ starting compound such that a molar ratio of each element in the resulting aqueous solution is adjusted to a predetermined range, is simultaneously fed with a sodium hydroxide/ammonia mixed aqueous solution to a reaction vessel of, for example, a precipitating reactor and mixed, before a predetermined residence time is set.

The Ni starting compound is added in such an amount that the condition 0.7 ≤ x < 1, preferably 0.75 ≤ x ≤ 0.9, even more preferably 0.8 ≤ x ≤ 0.9, and most preferably 0.8 ≤ x ≤ 0.85 is satisfied in the general formula of the lithium transition metal composite oxide prepared by the method according to the invention.

Feeding the metal salts containing aqueous solution and the sodium hydroxide/ammonia mixed aqueous solution simultaneously to a reaction vessel, mixing and setting a residence time in the reaction vessel has a large and advantageous effect on controlling the secondary particle size and the density of the coprecipitated precursor particle to be produced. A preferred residence time is affected by a size of the reaction vessel, stirring conditions, a pH, and a reaction temperature, and the residence time is preferably 0.5 h or more. For increasing the particle size and density, the residence time is more preferably 5 h or more, and most preferably 10 h or more.

The optional doping with element M4, where M4 is one or more selected from B, Mg and Al, preferably one or more selected from Mg and Al, may be performed by any method know to the person skilled in the art. Preferably, a desired amount of a M4 starting compound is added to the aqueous solution containing at least the Ni starting compound, the Mn starting compound and the M2³⁺ starting compound. As the M4 starting compound, a metal salt is preferably used, which may be a sulfate, a nitrate, a carbonate, a halide, or the like, preferably a sulfate.

Preferably, in the lithium transition metal composite oxide obtained by the method of the invention, index z satisfies the condition 0 ≤ z ≤ 0.045. According to a further embodiment, index z satisfies the condition 0 < z ≤ 0.05, more preferably 0 < z ≤ 0.045, even more preferably 0.005 ≤ z ≤ 0.045.

The coprecipitate, that is, the coprecipitation precursor of the composite oxide, is preferably a compound containing at least Ni, Mn and a metal cation M2³⁺ mixed in a ratio as defined above. In case an alkali aqueous solution is used to initiate coprecipitation, as described above, a metal hydroxide coprecipitate is obtained as the coprecipitation precursor of the composite oxide.

The pH of the aqueous solution in the step of coprecipitating the metal hydroxide coprecipitate is not particularly limited, as long as it is in the alkaline (basic) range, but the pH is preferably set equal to or higher than 10.5 when a coprecipitated metal hydroxide is prepared as the coprecipitation precursor of the composite oxide. It is further preferred to control the pH in order to increase a tap density of the coprecipitated precursor. When the pH is adjusted between 10.5 and 12, a tap density of the coprecipitated precursor of 1.6 g/cm³ or more can be attained. By producing a lithium metal composite oxide using the coprecipitated precursor having a tap density of 1.6 g/cm³ or more, the initial charge/discharge efficiency and the high rate discharge performance of the lithium secondary battery can be improved.

As mentioned before, the coprecipitate is preferably obtained in the form of particles which remain in suspension and are then filtered off. For filtration, any commonly used method may be used, for example, a centrifuge or a suction filtration device may be used.

After filtration, the filtered crude coprecipitate material may be washed by any commonly used method, as long as the method can remove any impurities, such as residual solvent or excess base or complexing agent, if used, from the material obtained. If coprecipitation is performed in aqueous solution, water washing is preferably used, preferably with pure water in order to reduce the impurity content.

The step of treating the coprecipitation precursor to remove more than 85 %, preferably more than 90 %, even more preferably more than 95 %, of total water from said coprecipitation precursor is not particularly limited. Preferably, the treating of the coprecipitation precursor comprises heating to a temperature of more than 100 °C, or more than 200 °C, 300 °C, 400 °C or 500 °C, in order to evaporate total water and to obtain a composite oxide precursor.

The term "total water" as used herein should be understood to include water of crystallization (also called "water of hydration" or "lattice water"), that is, water molecules that are present in the framework or crystal lattice of the coprecipitation precursor due to its formation from aqueous solution, as well as water molecules attached or adsorbed to the surface of the coprecipitation precursor. By treating the coprecipitation precursor so that more than 85 % of total water is removed, discharge performance is significantly improved as compared to a case where less than 85 % of total water is removed. When the treatment of the coprecipitation precursor comprises heating, the temperature is preferably not set higher than 600 °C, as high rate discharge performance may be deteriorated. The heating temperature in the step of treating the coprecipitation precursor is preferably more than 100 °C to 600 °C, more preferably in the range of 400 ºC to 550 ºC.

The treatment of the coprecipitation precursor to remove total water is preferably performed in an oxidizing gas atmosphere, such as air, and is preferably performed for 1 to 10 hours, more preferably for 2 to 8 hours. For example, the coprecipitation precursor is heated to a temperature of more than 100 °C to 600°C, preferably in the range of 400 °C to 550 °C, for 1 to 10 hours in air in order to remove the total water. The treatment or heating of the coprecipitation precursor to remove total water may be performed in a kiln, for example a rotary kiln or roller hearth kiln, but is not limited thereto.

For the determination of the content of total water, a test specimen is dried at certain conditions (for example at 120°C under air) to a constant mass, and the loss of mass of the test specimen due to drying is considered to be water. The water content is calculated using the mass of water and the mass of the dry specimen.

According to the method of the present invention, the Li starting compound (Li⁺ source) for preparing the lithium transition metal composite oxide is selected from anhydrous lithium hydroxide (LiOH), lithium hydroxide monohydrate (LiOH·H₂O), lithium carbonate (Li₂CO₃), and any mixtures thereof, which is mixed with the heat-treated coprecipitation precursor (i.e., the composite oxide precursor) to obtain a mixture in which a molar ratio of Li and the sum of all metal components (M1, M2, M3/M3' and optionally M4) is in the desired range as defined above. Preferably, anhydrous LiOH is used, which may contain up to 4 wt.% LiOH·H₂O.

The Li starting compound is added such that the condition 0 < a(1-x-y-z) ≤ 0.05, preferably 0 < a(1-x-y-z) ≤ 0.03, is satisfied in the general formula of the lithium transition metal composite oxide prepared by the method according to the invention.

The calcining of the mixture comprising the coprecipitation precursor and the Li⁺ source is performed at a temperature of equal to or more than 700 °C, preferably 700 °C to 1000 °C, more preferably 700 °C to 850 °C, preferably in an oxidizing gas atmosphere, such as air. When the calcination temperature is too low, i.e., below 700 °C, the reaction between lithium and the metal components tends to hardly proceed to a sufficient extend, so that crystallization of the lithium transition metal composite oxide particles does not adequately proceed. On the other side, when the calcination temperature is too high, i.e., higher than 1000 °C, the metal cations tend to be reduced, for example Ni³⁺ tends to be reduced into Ni²⁺, which is then included in the Li⁺ sites, so that the metal occupancy of the Li⁺ sites in the composite oxide is increased.

The calcination time is preferably 1 to 20 hours, more preferably 6 to 18 hours. The calcination may be performed in a kiln, for example a rotary kiln or a roller hearth kiln, without being limited thereto.

After calcination, a lithium transition metal composite oxide is obtained that contains Li and at least Ni, Mn³⁺/Mn⁴⁺ and an ion M2³⁺ mixed in a molar ratio as defined above.

In order to prevent particle aggregation and to obtain a powder of the lithium transition metal composite oxide particles having an average secondary particle size of about 1 µm to about 50 µm, thereby improving electrochemical performance of the lithium secondary battery as mentioned above, a crushing or pulverization step can be performed subsequent to calcination using a pulverizer and a classifier for obtaining the powder in a predetermined shape. For example, a mortar, a ball mill, a sand mill, a vibration ball mill, a planetary ball mill, a jet mill, a counter jet mill, a swirling air flow jet mill, a sieve or the like is used.

Also, subsequent to calcination and optional pulverization, a purification step to remove impurities remaining from the preparation process, such as unreacted or excess of the Li starting compound, may be conducted by any commonly used method.

The lithium transition metal composite oxide of the present invention, and obtained or obtainable using the preparation method according to the present invention, has superior charge-discharge characteristics and exhibits excellent lifetime. The 0.1 C discharge capacity is 185 mAh/g or higher, and the initial charge-discharge efficiency is 85% or higher. The tap density is between 1.0 to 2.0 g/cm³, preferably between 1.6 to 2.0 g/cm³.

According to especially preferred examples of the invention, the lithium transition metal composite oxide prepared according to the method described herein has the composition Ni:Co:Mn:Mg:Al = (80:10:10:0:0), (83:8.5:8.5:0:0), (85:7.5:4:3.5:0), (90:5:0.5:4:0.5).

Accordingly, the present invention also provides for a lithium transition metal composite oxide having a general formula Li_{1+a(1-x-y-z)}M1ₓM2_{y}M3_{(1-a)(1-x-y-z)}M3'_{a(1-x-y-z)}M4_{z}O_{2+a(1-x-y-z)}, in which 0.7 ≤ x < 1, y = (1 - x)/2, 0 ≤ z ≤ 0.05 and 0 < a(1-x-y-z) ≤ 0.05, and where M1 is Ni having an oxidation state of three, M2 is one or more metals having an oxidation state of three, M3 and M3' are identically one or more metals with at least one metal being Mn, wherein metals M3 have an oxidation state of three and metals M3' have an oxidation state of four, and M4 is one or more selected from Mg, Al and B, which is obtained or obtainable by the above described method of the invention.

According to the present invention, a lithium transition metal composite oxide can be provided which has improved performance and lifetime when used as a positive electrode active material in a non-aqueous electrolyte lithium secondary battery.

Accordingly, the present invention therefore further provides for the use of the lithium transition metal composite oxide according to the invention as positive electrode active material in a non-aqueous electrolyte secondary lithium battery.

The object of the invention is further solved by a non-aqueous electrolyte secondary battery including a positive electrode which comprises the lithium transition metal composite oxide according to the invention as a positive electrode active material. The non-aqueous electrolyte secondary battery comprises the above-mentioned positive electrode, a negative electrode and an electrolyte.

When producing the positive electrode comprising the positive electrode active material comprising the lithium transition metal composite oxide according to the present invention, a positive electrode mixture prepared by adding and mixing a conducting agent and a binder into the positive electrode active material is applied onto a current collector by an ordinary method followed by a drying treatment, a pressurization treatment, and the like. Examples of the preferred conducting agent include acetylene black, carbon black and graphite. Examples of the preferred binder include polytetrafluoroethylene and polyvinylidene fluoride. Examples of materials for the current collector include aluminum, nickel, and stainless steel.

As the negative electrode, an electrode comprising a negative electrode active substance such as metallic lithium, lithium/aluminum alloys, lithium/tin alloys, graphite or black lead, or the like may be used, without being limited thereto.

As the electrolyte, a solution prepared by dissolving lithium phosphate hexafluoride as well as at least one lithium salt selected from the group consisting of lithium perchlorate, lithium borate tetrafluoride and the like in a solvent may be used, without being limited thereto.

Also, as a solvent for the electrolyte, a combination of ethylene carbonate and diethyl carbonate, as well as an organic solvent comprising at least one compound selected from the group consisting of carbonates, such as propylene carbonate and dimethyl carbonate, and ethers, such as dimethoxyethane, may be used, without being limited thereto.

The non-aqueous electrolyte secondary battery including the positive electrode comprising the positive electrode active material comprising the lithium transition metal composite oxide according to the present invention has excellent lifetime and such an excellent property that an initial discharge capacity thereof is about 185 to about 220 mAh/g.

It will be appreciated that variations to the foregoing embodiments of the invention can be made while still falling within the scope of the invention. Each feature disclosed in this specification, unless stated otherwise, may be replaced by alternative features serving the same, equivalent or similar purpose. Thus, unless stated otherwise, each feature disclosed is one example only of a generic series of equivalent or similar features.

All of the features disclosed in this specification may be combined in any combination, except combinations where at least some of such features and/or steps are mutually exclusive. In particular, the preferred features of the invention are applicable to all aspects of the invention and may be used in any combination. Likewise, features described in non-essential combinations may be used separately (not in combination).

## Claims

1. A lithium transition metal composite oxide having a general formula 1
Li_{1+a(1-x-y-z)}M1ₓM2_{y}M3_{(1-a)(1-x-y-z)}M3'_{a(1-x-y-z)}M4_{z}O_{2+a(1-x-y-z)}, [formula 1]
in which 0.7 ≤ x < 1, y = (1 - x)/2, 0 ≤ z ≤ 0.05 and 0 < a(1-x-y-z) ≤ 0.05, and where M1 is Ni having an oxidation state of three, M2 is one or more metals having an oxidation state of three, M3 and M3' are identically one or more metals with at least one metal being Mn, wherein metals M3 have an oxidation state of three and metals M3' have an oxidation state of four, and M4 is one or more selected from Mg, Al and B.

2. The lithium transition metal composite oxide according to claim 1, in which 0.75 ≤ x ≤ 0.9.

3. The lithium transition metal composite oxide according to claim 1 or 2, in which 0.8 ≤ x ≤ 0.9.

4. The lithium transition metal composite oxide according to one or more of the preceding claims, wherein 0 < a(1-x-y-z) ≤ 0.03.

5. The lithium transition metal composite oxide according to one or more of the preceding claims, wherein M3' and M3 are identically one or more selected from Mn, Ti, Zr, Ru, Re and Pt.

6. The lithium transition metal composite oxide according to one or more of the preceding claims, wherein M2 is one or more selected from V, Fe and Co.

7. The lithium transition metal composite oxide according to one or more of the preceding claims, wherein M2 is Co, and M3' and M3 are Mn.

8. The lithium transition metal composite oxide according to one or more of the preceding claims, wherein 0 ≤ z ≤ 0.045.

9. A method for preparing a lithium transition metal composite oxide having a general formula Li_{1+a(1-x-y-z)}M1ₓM2_{y}M3_{(1-a)(1-x-y-z)}M3'_{a(1-x-y-z)} M4_{z}O_{2+a(1-x-y-z)}, in which 0.7 ≤ x < 1, y = (1 - x)/2, 0 ≤ z ≤ 0.05 and 0 < a(1-x-y-z) ≤ 0.05, and where M1 is Ni having an oxidation state of three, M2 is one or more metals having an oxidation state of three, M3 and M3' are identically one or more metals with at least one metal being Mn, wherein metals M3 have an oxidation state of three and metals M3' have an oxidation state of four, and M4 is one or more selected from Mg, Al and B, the method comprising the steps of:
a) coprecipitating in an aqueous solution, which contains at least a Ni starting compound, a Mn starting compound and a M2³⁺ starting compound, a coprecipitation precursor;
b) treating the coprecipitation precursor to remove more than 85 % of total water from said coprecipitation precursor;
c) adding a Li starting compound to the coprecipitation precursor to obtain a mixture;
d) calcining the mixture at a temperature of equal to or more than 700 °C to obtain the lithium transition metal composite oxide.

10. The method for preparing a lithium transition metal composite oxide according to claim 9, the method comprising the steps of:
I-a) providing an aqueous solution containing at least a Ni starting compound, a Mn starting compound;
I-b) coprecipitating in the aqueous solution a coprecipitation precursor by adding to said aqueous solution an alkali aqueous solution;
I-c) treating the coprecipitation precursor at a temperature of more than 100 °C for 1 to 10 hours in an oxidizing atmosphere to remove more than 85 % of total water from said coprecipitation precursor and to obtain a composite oxide precursor;
I-d) adding a Li starting compound to the thus obtained composite oxide precursor to obtain a mixture;
I-e) calcining the mixture at a temperature of equal to or more than 700 °C in an oxidizing atmosphere for 1 to 20 hours to obtain the lithium transition metal composite oxide.

11. The method according to claim 10, wherein the alkali aqueous solution in step I-b) is selected from a sodium hydroxide aqueous solution, an ammonia aqueous solution, or a mixture thereof.

12. The method according to one or more of claims 9 to 11, wherein the temperature in the step of treating the coprecipitation precursor is more than 100 °C to 600 °C.

13. The method according to one or more claims 9 to 12, wherein the temperature in the step of treating the coprecipitation precursor is in the range of 400 ºC to 550 ºC.

14. The method according to one or more of claims 9 to 13, further comprising a step of pulverizing the lithium transition metal composite oxide subsequent to the calcining.

15. The method according to one or more of claims 9 to 14, wherein the Li starting compound is selected from LiOH, LiOH·H₂O, Li₂CO₃ and any mixtures thereof.

16. The method according to one or more of claims 9 to 15, wherein a M4 starting compound is added to the aqueous solution containing at least the Ni starting compound, the Mn starting compound and the M2³⁺ starting compound.

17. The method according to one or more of claims 9 to 16, wherein M2 is one or more selected from V, Fe and Co.

18. The method according to one or more of claims 9 to 17, wherein M2 is Co, and M3' and M3 are Mn.

19. A lithium transition metal composite oxide having a general formula Li_{1+a(1-x-y-z)}M1ₓM2_{y}M3_{(1-a)(1-x-y-z)}M3'_{a(1-x-y-z)}M4_{z}O_{2+a(1-x-y-z)}, in which 0.7 ≤ x < 1, y = (1 - x)/2, 0 ≤ z ≤ 0.05 and 0 < a(1-x-y-z) ≤ 0.05, and where M1 is Ni having an oxidation state of three, M2 is one or more metals having an oxidation state of three, M3 and M3' are identically one or more metals with at least one metal being Mn, wherein metals M3 have an oxidation state of three and metals M3' have an oxidation state of four, and M4 is one or more selected from Mg, Al and B, which is obtainable or obtained by the method of one or more of claims 9 to 18.

20. Use of a lithium transition metal composite oxide according to one or more of claims 1 to 8 or according to claim 19 as positive electrode active material in a non-aqueous electrolyte secondary lithium battery.

21. A non-aqueous electrolyte secondary lithium battery comprising a lithium transition metal composite oxide according to one or more of claims 1 to 8 or according to claim 19 as positive electrode active material.
